# EUROPÄISCHE PATENTANMELDUNG

(11) **EP 0 745 958 A2**
(43) Veröffentlichungstag der Anmeldung: **04.12.1996**
(21) Anmeldenummer: 96250108.6
(22) Anmeldetag: 15.05.1996
(51) Int. Cl.: G07B 17/00

(54) **Anordnung und Verfahren zur Datumseinstellung für elektronisch gesteuerte Frankiermaschinen**

(30) Priorität: 01.06.1995 DE 19520898
(71) Anmelder: Francotyp-Postalia AG & Co., 16547 Birkenwerder (DE)
(72) Erfinder: Kubatzki, Ralf, 10405 Berlin (DE)

(57) **Zusammenfassung**

Die Erfindung bezieht sich auf eine Anordnung und ein Verfahren zur Datumseinstellung für eine elektronisch gesteuerte Frankiermaschine. Der Erfindung lag die Aufgabe zugrunde, die Eingabe für den Bediener komfortabler zu gestalten.

Die Anordnung ist durch folgende Merkmale gekennzeichnet:
a) Tastatur zur Einstellung zur Eingabe des Datums und der Frankierwerte in Verbindung mit einer Funktionstaste für die Datumseinstellung,
b) Funktionstaste, um mindestens das Vordatieren des Datums zu verhindern,
c) elektronischen Logikschaltkreis mit Mitteln zum Vergleich des eingegebenen Datums mit dem zuvor gespeicherten Datum,
d) Mittel zum Veranlassen des Drucks mit dem Datum.

Das Verfahren ist durch folgende Merkmale gekennzeichnet:
- automatisches Hochzählen zum Vordatieren des Datums,
- Betätigung der Funktionstaste, um mindestens das automatische Vordatieren des Datums zu verhindern.

Weiterhin ist vorgesehen, daß eine weitere Betätigung der vorgenannten Funktionstaste zum Rücksetzen der Einstellung auf das aktuelle Datum durchgeführt wird oder dafür eine weitere Funktionstaste vorgesehen ist.

## Beschreibung

Die Erfindung bezieht sich auf eine Anordnung und ein Verfahren zur Datumseinstellung für elektronisch gesteuerte Frankiermaschine mit einem mechanischen Druckwerk oder nichtmechanischen Drucker.

Datumseinstellungen an bekannten Frankiermaschinen werden von Hand mittels eines einfachen Werkzeuges vorgenommen, z.B. werden mittels eines Stiftes die einzelnen Typenräder des Datumswerkes verstellt, oder es sind spezielle Rändeleinstellvorrichtungen oder tastengesteuerte Hebel vorgesehen. Die Verwendung eines zusätzlichen Werkzeuges erfordert Vorkehrungen gegen dessen Verlust und eine Rändeleinstellvorrichtung oder ein Hebel benötigen zusätzliche mechanische Sicherungen gegen eine unbeabsichtigte Verstellung. Da die Typenräder innerhalb der Frankiermaschine angeordnet sind, sind weitere zusätzliche Sicherungsvorkehrungen erforderlich, die ein Arbeiten der Maschine während der Datumseinstellung verhindern.

Ferner sind die Zahlen der Typenräder relativ klein und als Drucktypen schwerer erkennbar, so daß Fehleinstellungen häufiger vorkommen.

Eine mechanische Datumseinstellung ist daher unsicher und mechanisch und wirtschaftlich aufwendig. Aus der DE-OS 31 11 949 ist bekannt, mittels Schrittmotoren und speziell ausgebildeten Zahnstangen zusätzliche Typenräder zu betätigen. Dabei wird die Steuerung der Schrittmotoren durch eine Tastatur veranlaßt und durch eine elektronische Logik, z. B. einem Mikroprozessor in Verbindung mit Registern, Speichern und Sensoren die Einstellung der Zahnstangen überwacht, wie z.B. der DE-PS 31 11 953 und der DE-OS 29 16 811 entnehmbar ist.

Im US 4,649,489 wurde bereits ein Verfahren zur Datumseinstellung für elektronisch gesteuerte Frankiermaschinen vorgesehen, das die aufgezeigten zusätzlichen mechanischen Sicherungen nicht benötigt und damit deren Mängel nicht aufweist. Das Verfahren zur Einstellung der Typenräder des Datumsdruckwerkes in elektronisch gesteuerten Frankiermaschinen, die Schrittmotoren und durch diese bewegte Mittel zur Einstellung der Typenräder für den Druck der Frankierwerte und von Wahldruckwalzen aufweisen, ist jedoch nur auf ein mechanisches Druckwerk zugeschnitten.

Der Erfindung lag die Aufgabe zugrunde, eine eine Anordnung und ein Verfahren zur Datumseinstellung für elektronisch gesteuerte Frankiermaschine mit einem nichtmechanischen oder mechanischen Druckwerk zu schaffen und dabei die Eingabe für den Bediener komfortabler zu gestalten.

Diese Aufgabe ist durch die Erfindung gelöst, wie sie in den Kennzeichnungsteilen der Patentansprüche dargestellt ist.

Eine solche Anordnung zur Datumseinstellung in elektronisch gesteuerten Frankiermaschinen ist mit einem Drucker und zugehöriger Steuerung, einem batteriegestützten Kalendermodul für die Speicherung von mindestens einem aktuellen Datum, der mit der Steuerung verbunden ist, einer Tastatur, die mit der Steuerung für das Eingeben des Portowertes und für die Eingabe von Daten in die Steuerung verbunden ist ausgestattet.

Die Anordnung ist durch folgende Merkmale gekennzeichnet:
a) Tastatur zur Einstellung zur Eingabe des Datums und der Frankierwerte in Verbindung mit einer Funktionstaste für die Datumseinstellung und Mittel zum automatischen Hochzählen zum Vordatieren des Datums
b) Funktionstaste, um mindestens das Vordatieren des Datums zu verhindern,
c) elektronischen Logikschaltkreis mit Mitteln zum Vergleich des eingegebenen Datums mit dem zuvor gespeicherten Datum, sowie
d) Mittel zum Veranlassen des Drucks mit dem Datum.

Unter einem Kalendermodul wird ein nichtflüchtiger Speicher verstanden, der kalendarische Daten behandelt und speichert. Solche kalendarischen Daten sind das ortsübliche Datum (aktuelle Datum) sowie als zweites Datum ein für die Vordatierung erforderliches zukünftiges Datum (neues Datum) oder eine Differenz zum aktuellen Datum. Der Kalendermodul liefert ständig mindestens das aktuelle Datum.

Eine Funktionstaste, die mit der Steuerung verbunden ist, bestimmt die Art der Eingabe, d.h. für das Eingeben des Datums, des Portowertes oder für die Eingabe von anderen Daten. Erfolgt eine Veränderung des Datums in Verbindung mit einem Vordatieren auf ein neues Datum, werden Mitteln zum Vergleich des veränderten Datums mit dem mittels der Steuerung in einem Speicher zuvor gespeicherten Datum angesteuert, um gegebenenfalls das zu druckende Datum zu verändern. Der elektronische Logikschaltkreis ist mit Mittel zur Ausgabe eines Druckbefehls zum Drucken eines Frankierabdruckes einschließlich mit dem neuen beziehungsweise veränderten oder aktuellen Datum ausgestattet.

Erfindungsgemäß ist vorgesehen, daß der elektronischen Logikschaltkreis mit hard- undloder software-Mitteln ausgestattet ist, zum
- automatischen Hochzählen zum Vordatieren des Datums und
- zur Reaktion auf die Betätigung der Funktionstaste, um mindestens das automatische Vordatieren des Datums zu verhindern.

Weiterhin ist vorgesehen, daß der elektronischen Logikschaltkreis mit Mitteln ausgestattet ist, zur Reaktion auf eine weitere Betätigung der vorgenannten Funktionstaste zum Rücksetzen der Einstellung auf das aktuelle Datum.

Alternativ kann der elektronische Logikschaltkreis mit Mitteln ausgestattet sein, zur Reaktion auf eine Betätigung einer weiteren Funktionstaste zum Rücksetzen der Einstellung auf das aktuelle Datum.

Das Verfahren ist durch folgende Merkmale gekennzeichnet:
- automatisches Hochzählen zum Vordatieren des Datums,
- Verhindern einer automatischen Vordatierung des Datums in Folge der Betätigung der Funktionstaste.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1a, ein Blockschaltbild für ein mechanisches Druckwerk,
Figur 1b, ein Blockschaltbild für ein nichtmechanisches Druckwerk,
Figur 2a, ein Flußdiagramm für ein mechanisches Druckwerk,
Figur 2b, ein Flußdiagramm für einen nichtmechanischen Drucker,
Figur 3a, ein erweitertes Flußdiagramm für ein mechanisches Druckwerk,
Figur 3b, ein erweitertes Flußdiagramm für einen nichtmechanischen Drucker,

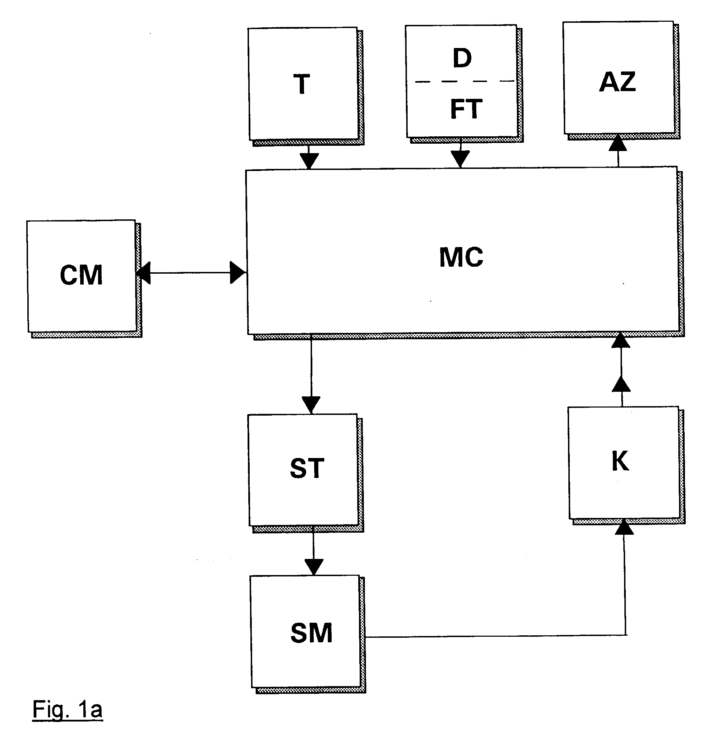

Anhand eines - in der Fig. 1a gezeigten - Blockschaltbildes wird die Erfindung näher erläutert. Das Blockschaltbild entspricht voll dem in der US 4,649,489 gezeigten Blockschaltbild für ein mechanisches Druckwerk.

Für die Einstellung des Datums wird die vorhandene Frankierwerttastatur T zur Einstellung der Frankierwerte einer Frankiermaschine verwendet. Das Datum erscheint auf der alphanumerischen Anzeigevorrichtung AZ, vorzugsweise einer LCD-Anzeige, der Maschine. Nach Betätigen einer Funktionstaste D vergleicht die elektronische Logik MC das eingegebene Datum mit dem eingestellten Wert und veranlaßt über die Schrittmotorsteuerung ST gegebenenfalls die Verstellung der Typenräder des Datumwerkes durch die Schrittmotoren SM. Über eine Kontrolleinrichtung K werden die Stellungen der Schrittmotoren SM zum Vergleich mit den vorgegebenen Werten der elektronischen Logik MC zugeführt. Ein Kalendermodul CM ist mit der elektronischen Logik MC verbunden.

Die Funktionstaste D für die Datumseinstellung, wie auch andere Funktionstasten für die Frankierwerteinstellung und/oder den Wahldruck (z.B. Einschreiben, Drucksache usw.), die vor oder nach der Eingabe eines Wertes zu betätigen sind, sind bei entsprechender Programmierung auch ohne Ziffern- oder Code-Eingaben über die Zehnertastatur zur Einstellung der Frankierwerte betätigbar.

Für die Datumseingabe ist beispielsweise die Logik der Maschine derart ausgelegt, daß nur ein neues Datum einstellbar ist, das zeitlich nach dem in der Maschine gespeicherten liegt, so daß eine Datumsrückstellung nur auf das aktuelle Datum möglich ist, welches der Kalendermodul CM auch im ausgeschalteten Zustand der Frankiermaschine liefert.

Das neue Datum oder die Änderung gegenüber dem aktuellen Datum werden im batteriegestützten Kalendermodul CM gespeichert. Geeignet ist beispielsweise der Baustein DS 1642 von Dallas Seniconductor, welcher eine prognostizierte Batterielebensdauer von mindestens 10 Jahren und damit einen Datenerhalt in der Größenordnung eines EEPROM's erreicht. Vorteilhaft ist die unbegrenzte Anzahl von Schreibzyklen kombiniert mit kurzen Schreib- und Lesezugriffszeiten zu einem internen 2Kx8NV-SRAM.

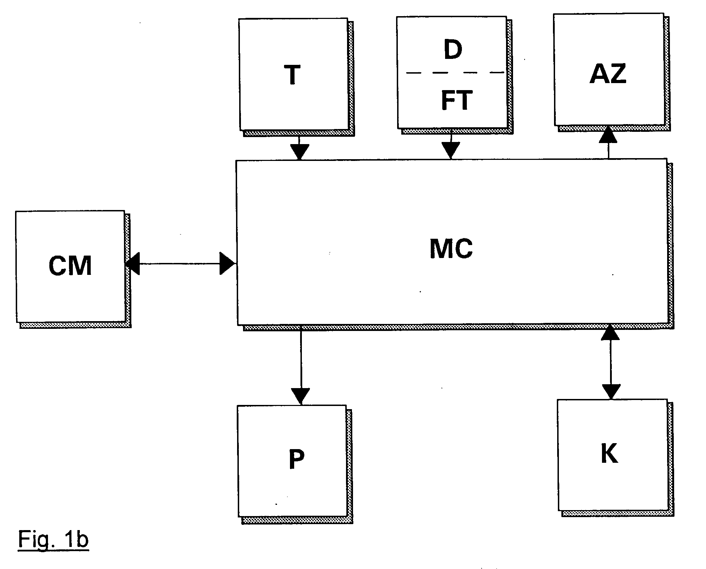

Die Figur 1b zeigt ein Blockschaltbild für eine Ausführungsvariante mit einem nichtmechanischen Drucker. Eine Anzeigevorrichtung AZ, Tastatur T, mindestens eine zusätzliche Funktionstaste FT, D und ein Kalendermodul CM sind mit der elektronischen Logik MC verbunden, an der auch ein Drucker P angeschlossen ist. Die Anzeigevorrichtung AZ ist vorzugsweise eine LCD-Anzeige.

Nach Betätigen einer Funktionstaste D vergleicht die elektronische Logik MC das eingegebene Datum mit dem eingestellten Wert und veranlaßt einen Druck mit dem entsprechend ausgewählten Datum.

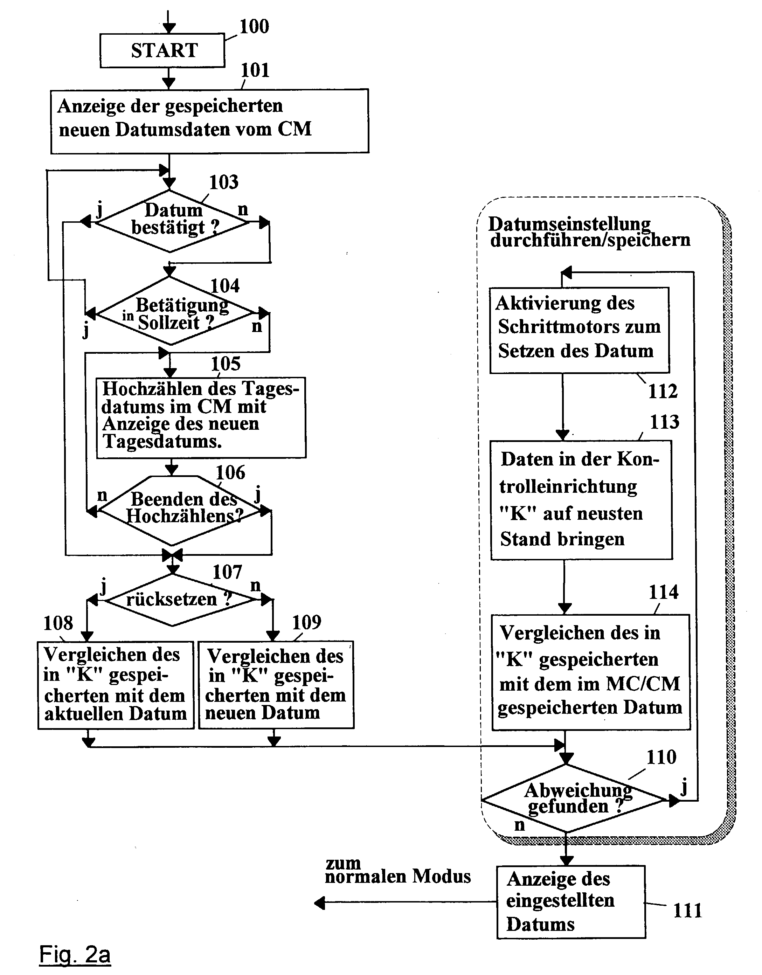

In der Fig. 2a ist ein Flußdiagramm für die erfindungsgemäße Datumseinstellung am Beispiel der Anordnung gemäß Figur 1a dargestellt. Nach dem Einschalten und Initialisierung der Frankiermaschine wird der Kalendermodul CM von der elektronischen Steuerung abgefragt und das neue Datum angezeigt. Ist keine Vordatierung eingestellt - das heißt, die Differenz gegenüber dem aktuellen Datum beträgt Null - dann sind neues Datum und aktuelles Datum gleich. Folglich wird das aktuelle Datum im Schritt 101 angezeigt. Während der vorausgegangenen Initialisierung im Schritt 100 wurde zwar einem nichtflüchtigen Speicher der Kontrolleinrichtung K das gemessene Datum entnommen, ohne daß jedoch eine Anzeige der momentanen Datumseinstellung der Typenräder erfolgt. Nach der Anzeige des Datums im Schritt 101 wird im Schritt 103 die Eingabetastatur abgefragt, ob der Benutzer Eingabewünsche hat oder ob er keine Eingabewünsche hat. Soll keine Änderung der Datierung erfolgen, so wird über Schritt 107 der Schritt 109 erreicht und später der Schritt 110 erreicht.

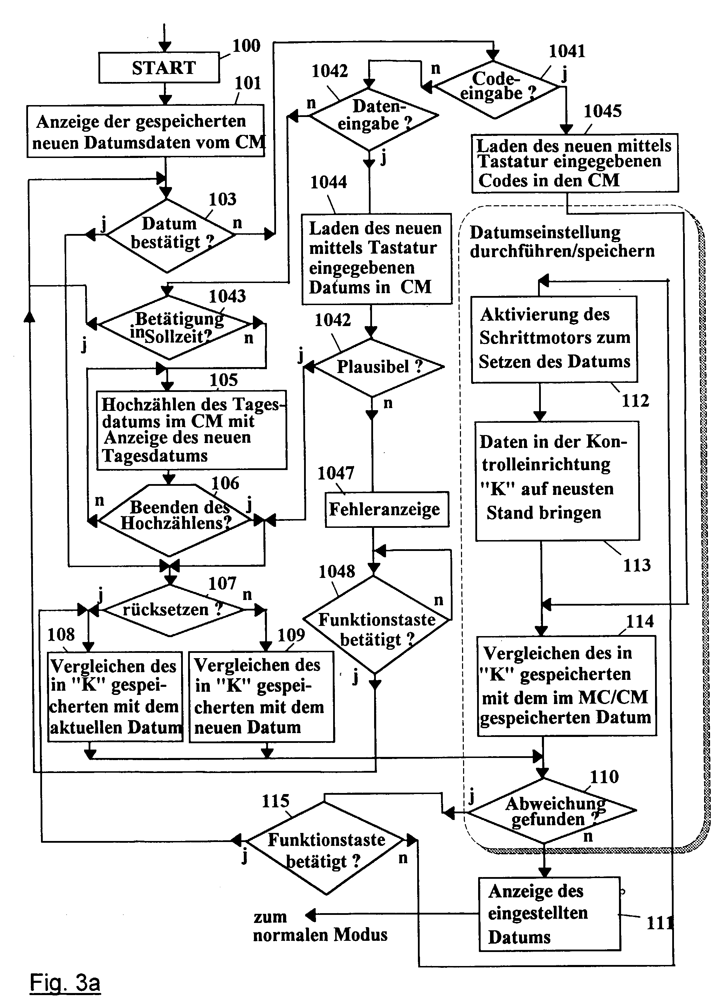

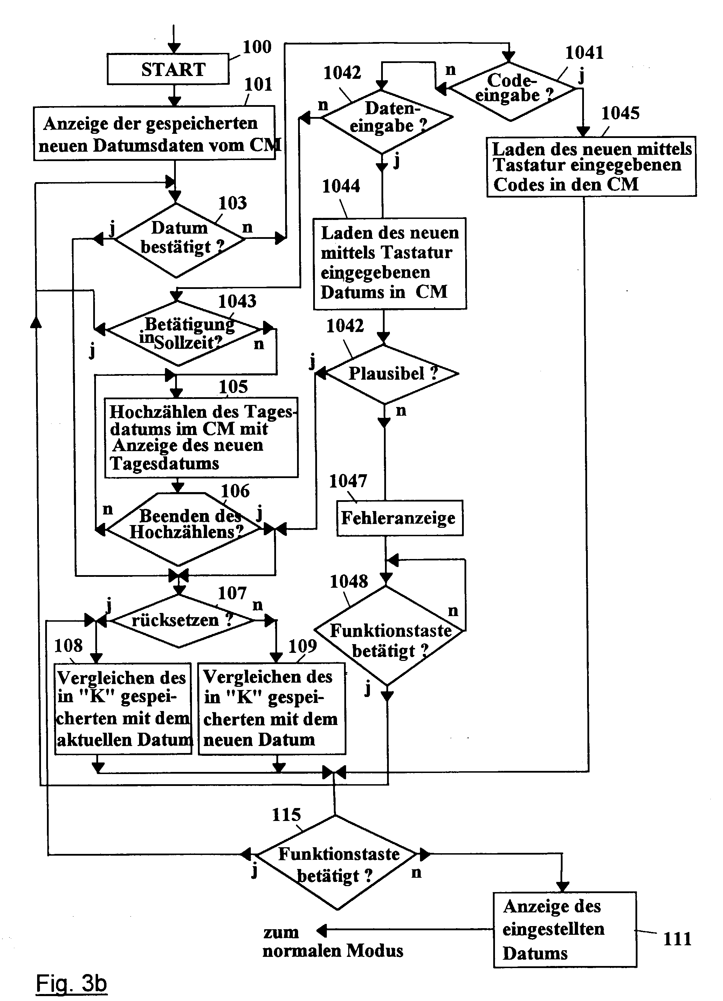

Im Schritt 110 wird die Abweichung ausgewertet, beispielsweise nachdem im Schritt 108 das aktuelle Datum aus dem Kalendermodul mit dem momentanen Datum, welches entsprechend der Typenrad-Einstellung vorliegt, verglichen wird. Wird keine Abweichung festgestellt, so wird - wie bereits im Patent US 4 649 489 beschrieben - der Schritt 111 erreicht. Wird jedoch eine Abweichung festgestellt, so wird - wie ebenfalls bereits im Patent US 4 649 489 beschrieben - eine Anzahl Schritte 112 bis 114 durchlaufen, um die erforderliche Einstellung der Typenräder für das Datum vorzunehmen. Bevor der Schritt 112 erreicht wird, kann ein Schritt 115 erreicht werden, um die Eingabe auf das aktuelle Datum zurückzusetzen (Fig. 3).

In den Schritten 103, 104 erfolgt die Abfrage in Verbindung mit einem Programm bzw. Logik der elektronischen Logik-Schaltung. Es ist vorgesehen, mittels einer Funktionstaste D das angezeigte neue oder aktuelle Datum zu bestätigen. Bei einer weiteren Betätigung der Funktionstaste D wird die gegebenenfalls vorliegende Differenz zwischen dem neuen Datum für die Vordatierung und dem aktuellen Datum für den normalen Frankierbetrieb auf Null zurückgesetzt. Erfolgt andererseits aber nach dem Einschalten der Frankiermaschine keine Betätigung der Tastatur bzw. Funktionstaste D, so wird nach Ablauf einer vorbestimmten Zeit, vorzugsweise zwei Sekunden, das Datum um einen Tag erhöht. Es ist klar, daß auf diese Weise nur eine Vordatierung aber keine Rückdatierung vorgenommen werden kann. Der Kalendermodul gestattet nur gültige Datumswerte. Ungültige Werte werden mittels einer Plausibilitätsprüfung erkannt und ein Fehler signalisiert.

Falls also zur Eingabe die Frankierwerttastatur T bzw. Funktionstaste D betätigt wird, entscheidet die Logik und/oder das Programm der elektronischen Logik darüber, ob eine Vordatierung oder eine andere Eingabe erfolgen soll. Der Schritt 104 umfaßt für eine zweite Variante entsprechende Subschritte 1041, 1042 1043... zur Erkennung der Benutzereingabevorgänge, welche in den Figuren 3a und 3b dargestellt sind. Außer Funktionstasten können andere äquivalente Betätigungsmittel und sogar Chipkarten zum Einsatz kommen, die einen Vorgang auslösen oder die Auslösung eines Vorganges verhindern bzw. rücksetzen.

Ist es beabsichtigt, das aktuelle Datum beizubehalten, dann wird letzlich der Schritt 110 erreicht, um gegebenenfalls über die Schritte 112, 113 und 114 eine Veränderung der Einstellung vorzunehmen, wenn die momentane Einstellung der Typenräder für das Datum nicht dem aktuellen Datum entspricht.

Anderenfalls wird im Schritt 105 eine im Display angezeigte Inkrementierung um einen Tag im Datum vorgenommen. Im Schritt 106 wird überprüft, ob die Inkrementierung beendet ist und anschließend auf den Schritt 107 verzweigt, wenn der Vorgang der Inkrementierung abgeschlossen ist. Anderenfalls wird auf den Schritt 105 zurückverzweigt.

Im Schritt 107 wird während einer Zeitperiode, beispielsweise zwei Sekunden, geprüft, ob die elektronische Voreinstellung rückgängig gemacht werden soll. Beispielsweise wird nach Durchlaufen der Schritte 105 und 106, wobei im Schritt 106 die Funktionstaste D betätigt wurde, vom Schritt 107 auf den Schritt 109 verzweigt. Nach dem Schritt 107 wird also ein Schritt 109 erreicht, um das neue Datum erfindungsgemäß im Kalendermodul zu speichern. Außerdem erfolgt ein Vergleich mit dem im Mittel K gespeicherten Wert. Wird von Anfang an keine Funktionstaste betätigt, das heißt, daß im Schritt 105 bis zu einem Grenzwert für das neue Datum inkrementiert würde, was ebenfalls im Schritt 106 erkannt würde, dann wird zum Schritt 108 verzweigt. Im letzten Fall wird im Schritt 108 das aktuelle Datum von der elektronischen Logikschaltung MC übernommen, um im nachfolgen den Schritt 110 die Abweichung von der vorgenannten Typenradeinstellung zu prüfen.

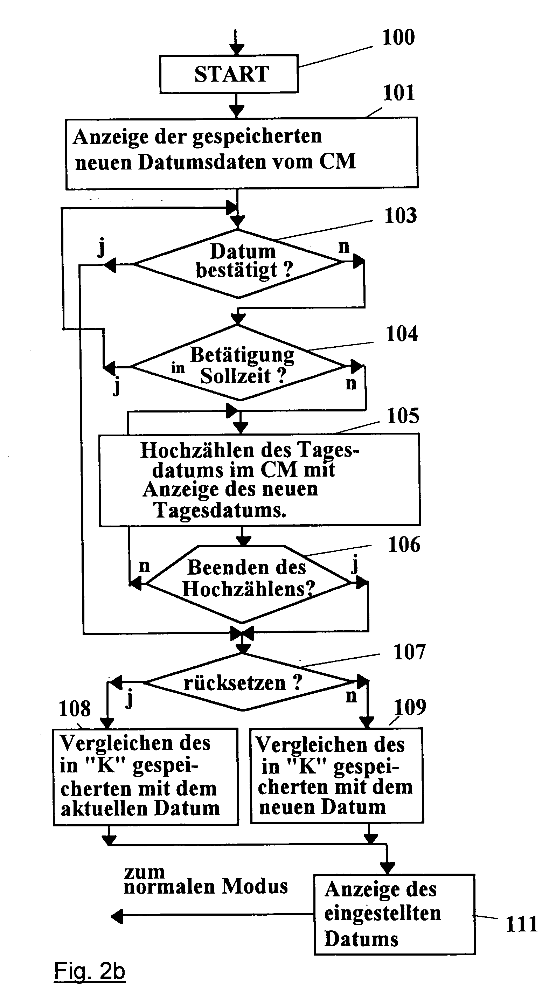

In der Figur 2b wird ein Flußdiagramm für einen nichtmechanischen Drucker dargestellt, welches im wesentlichen mit dem im Figur 2a gezeigten übereinstimmt. Bei einem nichtmechanischen Druckprinzip existieren allerdings keine Typenräder und Schrittmotoren zu deren Einstellung sowie auch keine Rückkopplung über eine Kontrolleinrichtung K zur elektronischen Logik MC. Die mit der elektronischen Logik MC verbundene Kontrolleinrichtung K ist hier ein nichtflüchtiger Speicher zur Speicherung der beim vorhergehen Drucken verwendeten Einstellung des Datums.

Die Schritte 110 bis 114 (eingerahmt) können entfallen. Die Schritte 108 und 109, in welchen der Vergleich mit einem beim vorhergehenden Drucken verwendeten Datum vorgenommen wird, erlauben, in einem folgenden Schritt 111 eine entsprechende Anzeige vorzunehmen, insbesondere hinsichtlich eines Datumswechsels und/oder einer Vordatierung. Vom Schritt 111 wird dann wieder zum normalen Modus verzweigt.

Die Figur 3a zeigt ein erweitertes Flußdiagramm. Nach dem Start im Schritt 100 wird das im Kalendermodul gespeicherte neue Datum angezeigt (Schritt 101) und die Tastatur auf Dateneingabe überwacht. Ist das Datum in Ordnung, wird über den Schritt 107 auf den Schritt 109 verzweigt. Anderenfalls wird auf den Subschritt 1041 des Schrittes 104 verzweigt, in welchem überprüft wird, ob ein Code eingegeben wurde. Unter Code wird eine vorbestimmte Eingabekombination, die nicht als Datum zu werten ist, beziehungsweise ein Codewort verstanden. Ist das der Fall, wird auf den Subschritt 1045 zur Speicherung des eingegebenen Codes im nichtflüchtigen Speicher des elektronischen Logikschaltkreises MC verzweigt. Anderenfalls wird auf den Subschritt 1042 verzweigt, in welchem überprüft wird, ob mittels Tastatur ein neues Datum in den Kalendermodul eingegeben wurde. Ist das der Fall, wird auf den Subschritt 1044 verzweigt. Anderenfalls wird auf den Subschritt 1043 verzweigt, um zu überprüfen, ob es noch möglich ist, die Bestätigung innerhalb einer vorbestimmten Zeit zu erwarten. Ist das der Fall, wird auf den Schritt 103 zurückverzweigt. Anderenfalls ist die vorbestimmte Zeitperiode, vorzugsweise zwei Sekunden, überschritten und es wird der Schritt 105 erreicht. Im Schritt 105 wird das Datum um einen Tag inkrementiert. Anschließend wird im Schritt 106 überprüft, ob die Funktionstaste betätigt worden ist, um das Inkrementieren zu beenden. Bei einer vorbestimmten Anzahl von Inkrementierungsschritten wird automatisch eine Weiterführung der Inkrementierung gestoppt. Ist das nicht der Fall, wird auf den Schritt 105 zurückverzweigt, um weiter zu inkrementieren bis die Funktionstaste betätigt wurde. Vom Schritt 106 wird dann zum Schritt 107 weitergeschaltet. Es ist vorgesehen, daß der Kalendermodul eine Speicherung des aktuellen Datums und der Differenz zwischen dem neuen Datum und dem aktuellen Datum im nichtflüchtigen Speicher durchführt, daß die Frankiermaschine eingeschaltet wird und daß durch Betätigung der Funktionstaste im nichtflüchtigen Speicher die Differenz zum aktuellen Datum auf Null gesetzt wird.

Wurde vom Subschritt 1042 auf den Subschritt 1044 verzweigt, weil ein Eingeben eines Datums erkannt wurde, dann wird erfindungsgemäß im Kalendermodul CM das neue Datum nichtflüchtig gespeichert. Im Gegensatz dazu wird im Schritt 1045 eine Speicherung im elektronischen Logikschaltkreis vorgenommen, da ein Code keine plausible Datumseinstellung ergeben würde.

In Verbindung mit dem Kalendermodul CM erfolgt nämlich eine Plausibilitätsprüfung des manuell eingegebenen Datums. Die Plausibilitätsprüfung wird durch Vergleich mit dem im nichtflüchtigen Speicher NVM des Kalendermodules CM gespeicherten aktuellen Datum und unzulässigen Eingabekombinationen bzw. Code, die in der Frankiermaschine nichtflüchtig gespeichert sind, durchgeführt.

In einer weiteren Variante ist vorgesehen, daß eine erste Betätigung einer ersten Funktionstaste zur Quittierung des neuen Datums erfolgt und daß eine zweite Betätigung einer zweiten Funktionstaste zur automatischen Datumseinstellung führt und daß eine Betätigung ausgewählter numerischer Tasten in Verbindung mit der Funktionstaste zur manuellen Datumseinstellung führt, wobei der elektronische Logikschaltkreis eine Plausibilitätsprüfung durchführt, so daß nur eine Datumsvordatierung möglich ist mit plausiblen Daten. Wurde ein falsches, das heißt, nicht existierendes Datum oder altes Datum (Rückdatierung) eingegeben, so wird der Subschritt 1047 erreicht, um über das Display eine Fehlermeldung auszugeben oder es wird mindestens der Fehler signalisiert. Letzteres erfolgt indem beispielsweise die Anzeige blinkt oder indem mittels Beeper der Fehler akustisch signalisiert wird. Außerdem wird auf den Schritt 103 zurückverzweigt, wenn im Schritt 1048 erkannt wid, daß eine Funktionstaste betätigt wurde. Ist jedoch das neu eingegebene Datum plausibel, dann wird der Schritt 107 erreicht.

Es ist vorgesehen, daß der Schritt 106 ebenfalls einen Subschritt zur Plausibilitätsprüfung mit umfaßt. War beim Inkrementieren ein Datum erreicht, welches ausgeblendet werden soll (Feiertag und ähnliche Tage), wird auch bei Betätigung der Funktionstaste das Inkrementieren noch nicht beendet. Das Inkrementieren wird in diesem Fall erst mit dem Erreichen eines plausiblen Datums beendet.
Vor dem Schritt 104 bzw. als Subschritt im Schritt 104 kann mindestens ein zusätzlicher Schritt 1041 eingefügt werden, welcher erkennt, ob ein Codewort eingegeben wurde oder ein Datum.

Als elektronischer Logikkreis wird vorzugsweise eine Central Prozessor Unit (CPU) eingesetzt. Als Prozessor kann beispielsweise ein CMOS-Einchip-8-bit-Microcontroller Philips 80C851 bzw. 83C851 mit einem nichtflüchtigen 256x8-bit E²PROM als interner Prozessorspeicher eingesetzt werden. Das Codewort kann im oben genannten internen Prozessorspeicher über 50 000 mal nichtflüchtig gespeichert werden. Der Datenerhalt wird ebenfalls für 10 Jahre garantiert. Ein anderer geeigneter Prozessor ist beispielsweise der TMS 370C010 von Texas Instruments, der ebenfalls einen internen 256 Byte E²PROM aufweist.

Es ist vorgesehen, daß eine manuelle Eingabe innerhalb einer Zeitperiode vorgenommen werden kann und nach Ablauf der Zeitperiode eine automatische Datumseinstellung und/oder Vordatierung oder eine datumsfreie Einstellung erfolgt. Die CPU prüft, ob das eingegebene Datum plausibel ist, anderenfalls wird ein Fehler signalisiert (Blinken der Anzeige/Beeper, Sondersymbol). Es ist vorgesehen, daß ein Vergleich nach der manuellen Eingabe durchgeführt wird, ob ein plausibles Datum eingegeben wurde und zum Eingabeschritt zurückverzweigt wird, wenn eine Funktionstaste betätigt wird (im Subschritt 1048).

Nach Betätigung der Funktionstaste kann die Eingabe wiederholt werden, bis die Frankiermaschine die Eingabe als neues Datum oder Code annimmt.

Die Typenräder des Datumdruckwerkes sind derart ausgebildet, daß sie mindestens eine Leerstelle aufweisen. Diese Leerstelle, d. h. eine Stelle ohne Ziffer oder statt einer Ziffer ein Zeichen, wie z.B. ein Stern, Strich usw., ist für eine datumsfreie Einstellung vorgesehen, wie sie von einigen Postverwaltungen gefordert wird. Diese wird durch Betätigen in der vorgenannten Weise Null für die datumsfreie Einstellung vorgenommen. Es ist vorgesehen, daß ein vorbestimmtes nicht als Datumswort für die Vordatierung geeignetes Datum als Codewort gewertet wird.

Eine zulässige Eingabekombination ist OOOOOO. Diese sechsfache Nulleingabe dient zur datumsfreien Einstellung. Die CPU erkennt den Code im Schritt 1041 sowie speichert im Schritt 1045 den Code und zeigt ihn im Display an und führt eine entsprechende Einstellung durch, wobei die Nullen nicht mitgedruckt werden. Vom Subschritt 1045 wird dazu auf den Schritt 114 verzweigt. Nach dem Vergleich im Schritt 114, finden einer Abweichung im im Schritt 110 und dem Aktivieren der Schrittmotoren ST im Schritt 112 sowie dem Einstellen der Typenräder wird die Position im Gerät K gespeichert (Schritt 113). Anschließend wird das Codewort aus der CPU mit den im Gerät K gespeicherten Daten verglichen (Schritt 114), um dann den Schritt 110 zu erreichen, von dem auf den Schritt 112 zurückverzweigt wird, wenn eine Abweichung im Schritt 110 festgestellt und keine Funktionstaste D im Schritt 115 betätigt wurde, um die Einstellung auf das aktuelle Datum umzuschalten. Zu diesem Zweck wird auf den Schritt 108 verzweigt. .

Beim Einschalten der Frankiermaschine wird für eine begrenzte Zeit, beispielsweise zwei Sekunden, das jeweils gespeicherte Datum angezeigt. Nach einer gegebenenfalls neuen Datumseingabe wird im Schritt 111 das neue, aktuelle bzw. das korrigierte Datum auf der Anzeigeeinrichtung AZ sichtbar dargestellt, falls im Schritt 110 keine Abweichung bei der Einstellung festgestellt wurde.

Die Mittel zum Einstellen der Typenräder sind nur vorzugsweise bewegte Zahnstangen. Ebenfalls sind äquivalente Mittel zur Betätigung der Typenräder einsetzbar, welche durch einen Schrittmotor angetrieben werden.

Die erfindungsgemäße Lösung ist auch auf Thermotransfer oder andere nichtmechanische Drucker anwendbar. Bei einem nichtmechanischen Druckprinzip ist die mit der elektronischen Logik MC verbundene Kontrolleinrichtung K wieder ein nichtflüchtiger Speicher zur Speicherung der beim vorhergehen Drucken verwendeten Einstellung des Datums.

In der Figur 3b wird ein erweitertes Flußdiagramm für einen nichtmechanischen Drucker dargestellt, welches im wesentlichen mit dem im Figur 3a gezeigten übereinstimmt. Jedoch entfallen wieder die Schritte 110 bis 114 (eingerahmt). Von den Schritten 108, 109 und 1045 wird direkt auf einen Schritt 115 verweigt, in welchem eine Abfrage nach Betätigung einer Funktionstaste erfolgt, um dann auf den Schritt 103 zurückzuverzweigen. Anderenfalls wird auf den Schritt 111 zur Anzeige verzweigt.

Die Schritte 108 und 109, in welchen der Vergleich mit einem beim vorhergehenden Drucken verwendeten Datum vorgenommen wird, erlauben, in einem folgenden Schritt 111 eine entsprechende Anzeige vorzunehmen, insbesondere hinsichtlich eines Datumswechsels und/oder einer Vordatierung. Vom Schritt 111 wird dann wieder zum normalen Modus verzweigt, wenn innerhalb eines vorbestimmten Zeitraumes keine weitere Funktionstaste mehr betätigt wurde, was wieder in einem Schritt 115 festgestellt wird.

Das Verfahren umfaßt die folgende wesentliche Schritte:
a) Eingabe des Datums mittels der vorhandenen Tastatur in Verbindung mit einer Funktionstaste für die Datumseinstellung oder automatisches Hochzählen zum Vordatieren des Datums.
b) Betätigung der Funktionstaste, um mindestens das Vordatieren des Datums zu verhindern,
c) Vergleich des veränderten Datums mit dem zuvor gespeicherten Datum mittels der Steuerung, um gegebenenfalls das zu druckende Datum zu verändern,
d) Ausgabe eines Druckbefehls zum Drucken eines Frankierabdruckes einschließlich mit dem neuen beziehungsweise veränderten oder aktuellen Datum.

Eine weitere Variante umfaßt folgende Schritte:
a) Betätigung einer ersten Funktionstaste zur Quittierung und gegebenenfalls Betätigung einer zweiten Funktionstaste zum Rücksetzen des neuen Datums auf das aktuelle Datum.
b) Vergleich des veränderten Datums mit dem mittels der Steuerung zuvor gespeicherten Datum, um gegebenenfalls das zu druckende Datum zu verändern,
c) Ausgabe eines Druckbefehls zum Drucken eines Frankierabdruckes einschließlich mit dem neuen beziehungsweise veränderten oder aktuellen Datum.

Eine andere Variante umfaßt die Schritte:
a) Betätigung einer zweiten Funktionstaste zum Rücksetzen des neuen Datums auf das aktuelle Datum,
b) Vergleich des veränderten Datums mit dem mittels der Steuerung zuvor gespeicherten Datum, um gegebenenfalls das zu druckende Datum zu verändern,
c) Ausgabe eines Druckbefehls zum Drucken eines Frankierabdruckes einschließlich mit dem neuen beziehungsweise veränderten oder aktuellen Datum.

Die Erfindung ist nicht auf die vorliegende Ausführungsform beschränkt, da offensichtlich weitere Ausführungen des Verfahrens bei anderen Anordnungen bzw. für nichtmechanische Drucker entwickelt bzw. eingesetzt werden können, die vom gleichen Grundgedanken der Erfindung ausgehend, von den anliegenden Ansprüchen umfaßt werden.

## Patentansprüche

1. Verfahren zur Datumseinstellung für eine elektronisch gesteuerte Frankiermaschine, mit Mitteln zur Einstellung der Typenräder im Datumsdruckwerk (Datumsräder) und der Typenräder für den Druck der Frankierwerte (Druckräder) und von Wahldruckwalzen, die mit den Datumsrädern, Druckrädern und den Wahldruckwalzen verbunden sind, Schrittmotoren, die mit den vorgenannten Mitteln für die Aktivierung der vorgenannten Mittel für das Setzen der ausgewählten Datumsräder und für das Setzen der Druckräder für das Drucken des Postwertes verbunden sind, ein elektronischer Logikschaltkreis gekoppelt mit den Schrittmotoren, ein batteriegestützter Kalendermodul für die Speicherung von mindestens einem aktuellen Datum, der mit dem elektronischen Logikschaltkreis verbunden ist, eine Tastatur, die mit dem elektronischen Logikschaltkreis für das Setzen des Portowertes und für die Eingabe von Daten in den elektronischen Logikschaltkreis verbunden ist und einer Funktionstaste, die mit dem elektronischen Logikschaltkreis verbunden ist, mit Vordatierung und Eingabe des Datums mittels der vorhandenen Zehnertastatur zur Einstellung der Frankierwerte in Verbindung mit einer Funktionstaste für die Datumseinstellung, Vergleich des eingegebenen Datums mit dem zuvor gespeicherten Datum über den elektronischen Logikschaltkreis und einem Vorrücken der Datumsräder im Falle einer Abweichung zwischen angegebenen und gespeicherten Daten, Wiederholung des Vergleiches und Vorrücken der Datumsräder, bis der Vergleich keine Abweichungen mehr zeigt, so daß die Datumsräder entsprechend eingestellt werden, **gekennzeichnet durch**,
- automatisches Hochzählen zum Vordatieren des Datums,
- Betätigung der Funktionstaste, um mindestens das automatische Vordatieren des Datums zu verhindern.

2. Verfahren nach Anspruch 1, **dadurch gekennzeichnet,** daß eine weitere Betätigung der Funktionstaste zur Verhinderung der Vordatierung und zum Rücksetzen der Einstellung auf das aktuelle Datum durchgeführt wird.

3. Verfahren nach Anspruch 1 und 2, **dadurch gekennzeichnet,** daß der Kalendermodul eine Speicherung des aktuellen Datums und der Differenz zwischen dem neuen Datum und dem aktuellen Datum im nichtflüchtigen Speicher durchführt, daß die Frankiermaschine eingeschaltet wird und daß durch Betätigung der Funktionstaste im nichtflüchtigen Speicher die Differenz zum aktuellen Datum auf Null gesetzt wird.

4. Verfahren nach Anspruch 1 bis 3, **dadurch gekennzeichnet,** daß eine erste Betätigung der Funktionstaste zur Quittierung des neuen Datums erfolgt und das eine zweite Betätigung der Funktionstaste zur automatischen Datumseinstellung führt und das eine Betätigung ausgewählter numerischer Tasten in Verbindung mit der Funktionstaste zur manuellen Datumseinstellung führt, wobei der elektronische Logikschaltkreis eine Plausibilitätsprüfung durchführt, so daß nur eine Datumsvordatierung möglich ist mit plausiblen Daten.

5. Verfahren zur Datumseinstellung für elektronisch gesteuerte Frankiermaschine, mit Mitteln zur Einstellung der Typenräder im Datumsdruckwerk (Datumsräder) und der Typenräder für den Druck der Frankierwerte (Druckräder) und von Wahldruckwalzen, die mit den Datumsrädern, Druckrädern und den Wahldruckwalzen verbunden sind, Schrittmotoren, die mit den vorgenannten Mitteln für die Aktivierung der vorgenannten Mittel für das Setzen der ausgewählten Datumsräder und für das Setzen der Druckräder für das Drucken des Postwertes verbunden sind, ein elektronischer Logikschaltkreis gekoppelt mit den Schrittmotoren, ein batteriegestützter Kalendermodul für die Speicherung von mindestens einem aktuellen Datum, der mit dem elektronischen Logikschaltkreis verbunden ist, eine Tastatur, die mit dem elektronischen Logikschaltkreis für das Setzen des Portowertes und für die Eingabe von Daten in den elektronischen Logikschaltkreis verbunden ist und einer Funktionstaste, die mit dem elektronischen Logikschaltkreis verbunden ist, mit Vordatierung und Vergleich des eingegebenen Datums mit dem zuvor gespeicherten Datum über den elektronischen Logikschaltkreis sowie einem Vorrücken der Datumsräder im Falle einer Abweichung zwischen angegebenen und gespeicherten Daten, Wiederholung des Vergleiches und Vorrücken der Datumsräder, bis der Vergleich keine Abweichungen mehr zeigt, so daß die Datumsräder entsprechend eingestellt werden, **gekennzeichnet durch,**
- automatisches Hochzählen zum Vordatieren des Datums auf ein neues Datum,
- Betätigung einer ersten Funktionstaste zur Quittierung und gegebenenfalls Betätigung einer zweiten Funktionstaste zum Rücksetzen des neuen Datums auf das aktuelle Datum.

6. Verfahren zur Datumseinstellung für elektronisch gesteuerte Frankiermaschine, mit Mitteln zur Einstellung der Typenräder im Datumsdruckwerk (Datumsräder) und der Typenräder für den Druck der Frankierwerte (Druckräder) und von Wahldruckwalzen, die mit den Datumsrädern, Druckrädern und den Wahldruckwalzen verbunden sind, Schrittmotoren, die mit den vorgenannten Mitteln für die Aktivierung der vorgenannten Mittel für das Setzen der ausgewählten Datumsräder und für das Setzen der Druckräder für das Drucken des Postwertes verbunden sind, ein elektronischer Logikschaltkreis gekoppelt mit den Schrittmotoren, ein batteriegestützter Kalendermodul für die Speicherung von mindestens einem aktuellen Datum, der mit dem elektronischen Logikschaltkreis verbunden ist, eine Tastatur, die mit dem elektronischen Logikschaltkreis für das Setzen des Portowertes und für die Eingabe von Daten in den elektronischen Logikschaltkreis verbunden ist und einer Funktionstaste, die mit dem elektronischen Logikschaltkreis verbunden ist, mit Vordatierung und Vergleich des eingegebenen Datums mit dem zuvor gespeicherten Datum über den elektronischen Logikschaltkreis sowie einem Vorrücken der Datumsräder im Falle einer Abweichung zwischen angegebenen und gespeicherten Daten, Wiederholung des Vergleiches und Vorrücken der Datumsräder, bis der Vergleich keine Abweichungen mehr zeigt, so daß die Datumsräder entsprechend eingestellt werden, **gekennzeichnet durch,**
- automatisches Hochzählen zum Vordatieren des Datums,
- Betätigung der Funktionstaste, um mindestens das automatische Vordatieren des Datums zu verhindern und Eingabe von Daten, wobei eine Übertragung des Eingangssignal von der Tastatur zum elektronischen Logikschaltkreis erfolgt, um eine Zifferneingabe, einen Vergleich und Einstellen der Datumsräder durchzuführen.

7. Verfahren nach Anspruch 6, **dadurch gekennzeichnet,** daß ein Vergleich nach der manuellen Eingabe durchgeführt wird, ob ein plausibles Datum eingegeben wurde und zum Eingabeschritt zurückverzweigt wird, wenn eine Funktionstaste betätigt wird.

8. Verfahren nach Anspruch 6 bis 7, **dadurch gekennzeichnet,** daß eine manuelle Eingabe innerhalb einer Zeitperiode vorgenommen werden kann und nach Ablauf der Zeitperiode eine automatische Datumseinstellung und/oder Vordatierung erfolgt.

9. Verfahren zur Datumseinstellung für elektronisch gesteuerte Frankiermaschine, mit Mitteln zur Einstellung der Typenräder im Datumsdruckwerk (Datumsräder) und der Typenräder für den Druck der Frankierwerte (Druckräder) und von Wahldruckwalzen, die mit den Datumsrädern, Druckrädern und den Wahldruckwalzen verbunden sind, Schrittmotoren, die mit den vorgenannten Mitteln für die Aktivierung der vorgenannten Mittel für das Setzen der ausgewählten Datumsräder und für das Setzen der Druckräder für das Drucken des Postwertes verbunden sind, ein elektronischer Logikschaltkreis gekoppelt mit den Schrittmotoren, ein batteriegestützter Kalendermodul für die Speicherung von mindestens einem aktuellen Datum, der mit dem elektronischen Logikschaltkreis verbunden ist, eine Tastatur, die mit dem elektronischen Logikschaltkreis für das Setzen des Portowertes und für die Eingabe von Daten in den elektronischen Logikschaltkreis verbunden ist und einer Funktionstaste, die mit dem elektronischen Logikschaltkreis verbunden ist, mit Vordatierung und Vergleich des eingegebenen Datums mit dem zuvor gespeicherten Datum über den elektronischen Logikschaltkreis sowie einem Vorrücken der Datumsräder im Falle einer Abweichung zwischen angegebenen und gespeicherten Daten, Wiederholung des Vergleiches und Vorrücken der Datumsräder, bis der Vergleich keine Abweichungen mehr zeigt, so daß die Datumsräder entsprechend eingestellt werden, **gekennzeichnet durch,**
- automatisches Hochzählen zum Vordatieren des Datums,
- Betätigung der Funktionstaste, um mindestens das automatische Vordatieren des Datums zu verhindern und Eingabe von Daten, wobei eine Übertragung des Eingangssignal von der Tastatur zum elektronischen Logikschaltkreis erfolgt, um eine Eingabe eines Codes, einen Vergleich und Einstellen der Datumsräder durchzuführen.

10. Verfahren nach Anspruch 9, **dadurch gekennzeichnet,** daß ein vorbestimmtes nicht als Datumswort für die Vordatierung geeignetes Datum als Codewort gewertet wird.

11. Verfahren zur Datumseinstellung in elektronisch gesteuerten Frankiermaschinen mit einem Drucker und zugehöriger Steuerung, einem batteriegestützten Kalendermodul für die Speicherung von mindestens einem aktuellen Datum, der mit der Steuerung verbunden ist, eine Tastatur, die mit der Steuerung für das Eingeben des Portowertes und für die Eingabe von Daten in die Steuerung verbunden ist und einer Funktionstaste, die mit der Steuerung verbunden ist, mit Vordatierung und Eingabe des Datums mittels der vorhandenen Zehnertastatur zur Einstellung der Frankierwerte in Verbindung mit einer Funktionstaste für die Datumseinstellung, Vergleich des veränderten Datums mit dem zuvor gespeicherten Datum mittels der Steuerung, um gegebenenfalls das zu druckende Datum zu verändern und mit Ausgabe eines Druckbefehls zum Drucken eines Frankierabdruckes einschließlich mit dem neuen, veränderten oder aktuellen Datum, **gekennzeichnet durch**
- Betätigung der Funktionstaste, um mindestens ein automatisches Vordatieren des Datums zu verhindern,

12. Verfahren nach Anspruch 11, **dadurch gekennzeichnet,** daß eine weitere Betätigung der zur Verhinderung der Vordatierung betätigbaren Funktionstaste, zum Rücksetzen der Einstellung auf das aktuelle Datum durchgeführt wird.

13. Verfahren nach Anspruch 11 und 12, **dadurch gekennzeichnet,** daß der Kalendermodul eine Speicherung des aktuellen Datums und der Differenz zwischen dem neuen Datum und dem aktuellen Datum im nichtflüchtigen Speicher durchführt, daß die Frankiermaschine eingeschaltet wird und daß durch Betätigung einer Funktionstaste im nichtflüchtigen Speicher die Differenz zum aktuellen Datum auf Null gesetzt wird.

14. Verfahren nach Anspruch 11 bis 13, **dadruch gekennzeichnet,** daß eine erste Betätigung der Funktionstaste zur Quittierung des neuen Datums erfolgt und das eine zweite Betätigung der Funktionstaste zur automatischen Datumseinstellung führt und das eine Betätigung ausgewählter numerischer Tasten in Verbindung mit der Funktionstaste zur manuellen Datumseinstellung führt, wobei die Steuerung eine Plausibilitätsprüfung durchführt, so daß nur eine Datumsvordatierung möglich ist mit plausiblen Daten.

15. Verfahren zur Datumseinstellung in elektronisch gesteuerten Frankiermaschinen mit einem Drucker und zugehöriger Steuerung, ein batteriegestützter Kalendermodul für die Speicherung von mindestens einem aktuellen Datum, der mit der Steuerung verbunden ist, eine Tastatur, die mit der Steuerung für das Eingeben des Postwertes und für die Eingabe von Daten in die Steuerung verbunden ist und einer Funktionstaste, die mit der Steuerung verbunden ist, mit Änderung auf ein neues Datum bei einer Vordatierung, Vergleich des veränderten Datums mit dem mittels der Steuerung zuvor gespeicherten Datum, um gegebenenfalls das zu druckende Datum zu verändern und mit Ausgabe eines Druckbefehls zum Drucken eines Frankierabdruckes einschließlich mit dem neuen, veränderten oder aktuellen Datum,
**gekennzeichnet durch**
- Betätigung einer ersten Funktionstaste zur Quittierung der Vordatierung und gegebenenfalls Betätigung einer zweiten Funktionstaste zum Rücksetzen des vordatierten neuen Datums auf das aktuelle Datum.

16. Verfahren zur Datumseinstellung in elektronisch gesteuerten Frankiermaschinen mit einem Drucker und zugehöriger Steuerung, ein batteriegestützter Kalendermodul für die Speicherung von mindestens einem aktuellen Datum, der mit der Steuerung verbunden ist, eine Tastatur, die mit der Steuerung für das Eingeben des Postwertes und für die Eingabe von Daten in die Steuerung verbunden ist und einer Funktionstaste, die mit der Steuerung verbunden ist, mit Veränderung des Datums in Verbindung mit einem Vordatieren auf ein neues Datum, Vergleich des veränderten Datums mit dem mittels der Steuerung zuvor gespeicherten Datum, um gegebenenfalls das zu druckende Datum zu verändern und mit Ausgabe eines Druckbefehls zum Drucken eines Frankierabdruckes einschließlich mit dem neuen beziehungsweise veränderten oder aktuellen Datum, **gekennzeichnet durch** eine Betätigung einer zweiten Funktionstaste zum Rücksetzen des vordatierten neuen Datums auf das aktuelle Datum.

17. Anordnung zur Datumseinstellung in elektronisch gesteuerten Frankiermaschinen mit einem Drucker und zugehöriger Steuerung, ein batteriegestützter Kalendermodul für die Speicherung von mindestens einem aktuellen Datum, der mit der Steuerung verbunden ist, eine Tastatur, die mit der Steuerung für das Eingeben des Postwertes und für die Eingabe von Daten in die Steuerung verbunden ist und einer Funktionstaste, die mit der Steuerung verbunden ist, mit Veränderung des Datums in Verbindung mit einem Vordatieren auf ein neues Datum, Vergleich des veränderten Datums mit dem mittels der Steuerung zuvor gespeicherten Datum, um gegebenenfalls das zu druckende Datum zu verändern und mit Ausgabe eines Druckbefehls zum Drucken eines Frankierabdruckes einschließlich mit dem neuen beziehungsweise veränderten oder aktuellen Datum, **gekennzeichnet durch**
a) Tastatur zur Einstellung zur Eingabe des Datums und der Frankierwerte in Verbindung mit einer Funktionstaste für die Datumseinstellung und Mittel zum automatischen Hochzählen zum Vordatieren des Datums
b) Funktionstaste, um mindestens das Vordatieren des Datums zu verhindern,
c) elektronischen Logikschaltkreis mit Mitteln zum Vergleich des eingegebenen Datums mit dem zuvor gespeicherten Datum, sowie
d) Mittel zum Veranlassen des Drucks mit dem Datum.

18. Anordnung, nach Anspruch 17, **dadurch gekennzeichnet,** daß der elektronischen Logikschaltkreis mit Mitteln ausgestattet ist, zum
- automatischen Hochzählen zum Vordatieren des Datums,
- zur Reaktion auf die Betätigung der Funktionstaste, um mindestens das automatische Vordatieren des Datums zu verhindern.

19. Anordnung, nach Anspruch 18, **dadurch gekennzeichnet,** daß der elektronischen Logikschaltkreis mit Mitteln ausgestattet ist, zur Reaktion auf eine weitere Betätigung der vorgenannten Funktionstaste zum Rücksetzen der Einstellung auf das aktuelle Datum.

20. Anordnung, nach Anspruch 18, **dadurch gekennzeichnet,** daß der elektronischen Logikschaltkreis mit Mitteln ausgestattet ist, zur Reaktion auf eine Betätigung einer weiteren Funktionstaste zum Rücksetzen der Einstellung auf das aktuelle Datum.
